# FASCICULE DE BREVET EUROPEEN

(11) **EP 0 474 571 B1**
(45) Date de publication et mention de la délivrance du brevet: **05.04.1995**
(21) Numéro de dépôt: 91420313.8
(22) Date de dépôt: 05.09.1991
(51) Int. Cl.: A61C 8/00

(54) **Implant pour fixation de prothèse**
Implantat für die Befestigung von Zahnprothesen
Implant for dental prosthesis

(30) Priorité: 06.09.1990 FR 9011345
(43) Date de publication de la demande: 11.03.1992
(73) Titulaire: PROSIS S.A., 73103 Aix les Bains Cédex (FR)
(72) Inventeur: Marillet, Roger, F-73200 Albertville (FR); Godefroy, Hubert, F-73200 Albertville (FR); Suleau, Jacques, F-42000 Saint Etienne (FR)
(74) Mandataire: de Beaumont, Michel

(56) Documents cités:
- US-A- 3 849 887
- US-A- 3 934 347
- US-A- 4 195 409
- US-A- 4 259 072
- US-A- 4 416 629

## Description

La présente invention concerne, de façon générale, des implants destinés à la réalisation d'endoprothèses de comblement ou des soutien en odontostomatologie, pour la chirurgie maxillo-faciale et pour la chirurgie plastique reconstructive et esthétique.

Un implant dentaire comportant toutes les caractéristiques du préambule de la revendication 1 est exposé dans le document US-A-4 416 629.

Il est connu de disposer dans un os des implants, afin de reconstruire une partie de cet os, de le consolider, ou de créer des parties fixes en protubérance servant à fixer une prothèse, par exemple une prothèse dentaire.

On a réalisé pendant longtemps des implants à partir de matériaux du type acier inoxydable. L'implant était emboîté dans un perçage réalisé dans l'os et parfois cet implant était vissé dans l'os. L'os étant un corps vivant, celui-ci reconnaît la présence d'un corps étranger et, avec le temps, engage un processus de rejet, voire de fonte osseuse, qui provoque des sensations désagréables chez le patient et/ou une désolidarisation de l'implant.

Pour remédier à cet inconvénient, on a récemment proposé d'utiliser comme implant un matériau du type carbone-carbone. Le document EP-A-0075525 propose l'utilisation d'un implant constitué d'une pièce monobloc réalisé dans un matériau du type carbone-carbone. Ce matériau n'est pas reconnu comme un corps étranger par l'os, et il se produit un phénomène d'ostéo-intégration qui est une reconstitution osseuse autour de l'implant des fibres de collagènes de l'os qui s'accrochent progressivement dans la structure de la pièce en carbone-carbone. Un tel implant présente toutefois l'inconvénient d'être d'une grande fragilité, notamment dans sa partie en protubérance. Dans la pratique, il n'est pas possible d'utiliser un tel implant en vue de la fixation d'une prothèse dentaire. En effet, lorsque l'implant monobloc en carbone-carbone est introduit dans un orifice ménagé à cet effet dans l'os, l'une des extrémités de l'implant présente une protubérance qui dépasse vers l'extérieur de l'os. Comme il faut attendre un certain temps pour que l'implant emboîté simplement dans l'orifice de l'os devienne solidaire de celui-ci, par le phénomène d'ostéo-intégration, la partie en protubérance de l'implant peut subir des contraintes et s'ébrécher ou se casser. Dans tous les cas, les contraintes, par exemple de mastication, tendent à faire bouger l'implant, ce qui limite le processus d'ostéo-intégration.

Les documents EP-A-0231400 et EP-A-0 343 135 proposent un implant réalisé en deux pièces, une première pièce de forme générale cylindrique filetée en titane venant se visser dans un perçage taraudé ménagé dans l'os, et une seconde pièce elle-même réalisée en titane venant se visser à l'intérieur de la première pièce. Un tel implant présente le grave inconvénient d'être soumis à des phénomènes de rejet. Le fait de ménager dans la première pièce un filetage et de ménager dans l'os un perçage taraudé de façon que cette première pièce se visse en se bloquant à l'intérieur de l'os ne constitue pas un moyen de fixation efficace à long terme, parce que le phénomène de rejet parvient à désolidariser l'implant, et celui-ci prend du jeu et peut finir par s'extraire. Dans tous les cas, un jeu même minime entre l'implant et l'os est néfaste, en particulier pour des questions d'hygiène.

Le document WO 86/02824 propose un perfectionnement aux implants réalisée en titane, ce perfectionnement consistant à ménager sur la surface extérieure de l'implant des orifices formant des cavités en grand nombre, de sorte que l'os pénètre dans ces cavités, ce qui assure une certaine solidarisation de l'implant à l'intérieur de l'os.

En fait, l'implant réalisé en carbone-carbone a été proposé il y a assez longtemps, mais n'a jamais été réellement mis en pratique du fait de sa fragilité. On lui a préféré des implants réalisés en métaux beaucoup plus résistants, même si ceux-ci présentent certains inconvénients dûs essentiellement au phénomène de rejet. Il faut préciser que, par exemple au niveau de la denture, les efforts mécaniques exercés sur dents, et par conséquent sur des implants dentaires, sont extrêmement importants. Il est fréquent de constater qu'une pièce formant implant dentaire peut être soumise à des forces de l'ordre de quelques centaines de newtons.

Le document US-A-3 849 887 expose un implant en un matériau du type carbone-carbone. La surface périphérique externe de cet implant ne présente pas de filetage destiné à venir se visser dans une cavité de la gencive.

Un object de la présente invention est de proposer un implant évitant le phénomène de rejet et présentant une bonne résistance mécanique et un module d'élasticité voisin de celui de l'os.

Un autre objet de la présente invention est de proposer un tel implant présentant en outre l'avantage d'être facile à poser et de n'être pas soumis à des risques de détérioration au cours de cette pose.

Un autre objet de la présente invention est de proposer un implant pouvant recevoir un objet à fixer rigidement par rapport à l'os, cet objet pouvant être fixé à l'implant de façon amovible.

Pour atteindre ces objets, la présente invention propose un implant comprenant une première pièce réalisée en un matériau du type carbone-carbone, de forme générale cylindrique, filetée à l'extérieur et destinée à venir se visser dans une cavité adaptée ménagée dans un os ; et une seconde pièce réalisée en un autre matériau présentant une dureté élevée, comprenant une partie adaptée à servir de base à la fixation d'un objet destiné à être relié à l'os rigidement ; la première et la seconde pièce comprenant des formes complémentaires permettant le vissage avec blocage de la seconde pièce dans la première.

Selon un mode de réalisation de la présente invention, la première pièce comprend un perçage taraudé sensiblement concentrique, débouchant au niveau de l'extrémité de cette pièce dirigée vers l'extérieur de l'os, et la deuxième pièce comporte une première partie formant vis destinée à venir se visser et se bloquer dans le perçage taraudé de la première pièce.

Selon un mode de réalisation de la présente invention, la deuxième pièce comprend en outre une seconde partie formant embase destinée à venir en appui sur ladite extrémité de la première pièce et formant une protubérance dirigée vers l'extérieur de l'os, servant de base rigide pour la fixation d'un objet destiné à être relié rigidement à l'os.

Le procédé de mise en place d'un implant du type susmentionné comprenant, après incision et décollement du lambeau mucopériosté, comporte les étapes suivantes : a) percer une cavité dans l'os ; b) mettre en place dans la cavité la première pièce surmontée d'une vis en un matériau non susceptible de présenter un phénomène d'ostéo-intégration ; c) protéger l'ensemble mis en place à l'étape (b) par un recouvrement du lambeau mucopériosté et attendre qu'un phénomène d'ostéo-intégration se produire entre l'os et la première pièce ; et d) enlever la vis et fixer la seconde pièce à la première pièce.

Ces objets, caractéristiques et avantages, ainsi que d'autres de la présente invention seront exposés plus en détail dans la description suivante de modes de réalisation particuliers, illustrés par les figures annexées parmi lesquelles :
les figures 1 à 4 représentent, en coupe transversale, des phases successives de la mise en place dans un os d'un implant selon la présente invention ;
la figure 5 est une vue en coupe d'une des pièces constituant un implant selon la présente invention ; et
la figure 6 est en vue de côté d'un implant selon la présente invention.

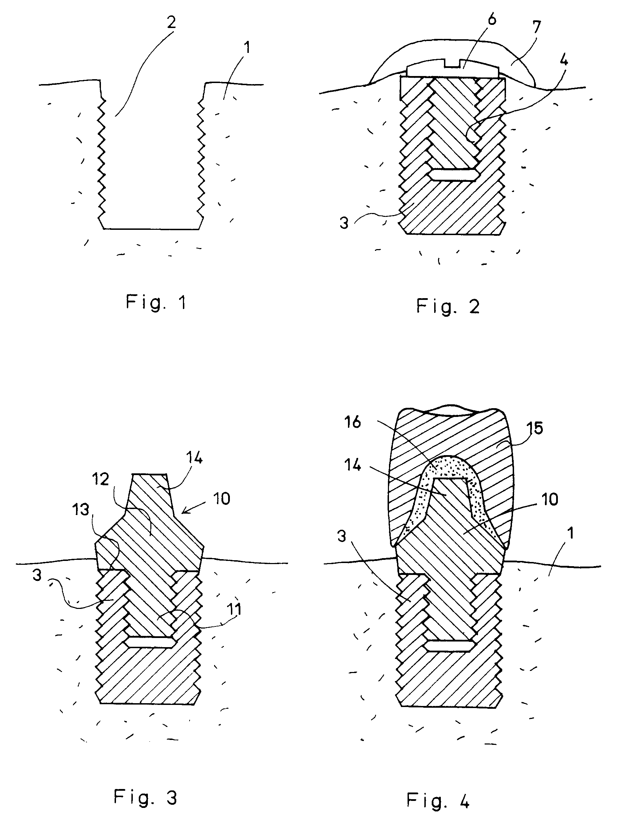

La figure 1 représente un os dans lequel on souhaite disposer un implant selon l'invention, par exemple afin de fixer une prothèse dentaire. Après incision et décollement du lambeau mucopériostè, on ménage dans cet os 1 un trou 2 taraudé sur la plus grande partie de sa hauteur, vers son fond. Ce trou peut avoir un diamètre relativement faible, par exemple d'environ 4 millimètres et les filets du taraudage peuvent avoir un pas d'environ 0,7 millimètre. La profondeur de ce trou dépend du problème à traiter et sera par exemple de 7 à 18 mm.

Ensuite, comme cela est représenté en figure 2, on réalise une première pièce monobloc 3 de l'implant présentant la forme générale d'un cylindre muni au moins à la partie inférieure de sa surface périphérique externe d'un filetage. La pièce 3 comporte en outre un perçage concentrique taraudé 4.

Une vis 6 s'engage dans le perçage taraudé 4. L'ensemble 3, 6 est vissé dans le trou taraudé 2 de sorte que, comme cela est représenté, la surface apparente de l'os arrive à peu près au sommet de la tête de vis. Enfin, le lambeau mucopériostè est réappliqué pour mise en nourrice de manière à protéger les interfaces apparentes entre les substances vivantes et les éléments implantés.

La pièce 3 est réalisée en un matériau du type carbone-carbone. Le fait que la pièce soit vissée dans le trou taraudé ménagé dans l'os permet de créer une légère contrainte de compression et d'assurer ainsi un bon contact entre la pièce 3 et l'os 1. Ce contact intime permet l'instauration rapide et efficace du processus d'ostéo-intégration. La pièce 3 en carbone-carbone est relativement fragile et d'une dureté relativement faible. C'est pour cette raison qu'il n'a jamais été envisagé, jusqu'à présent, de réaliser un filetage dans une telle pièce destinée à constituer un implant. En effet, a priori, de tels filets présentent une résistance mécanique faible, surtout si l'implant est de faible dimension. En fait, contrairement aux implants réalisés en métal pour lesquels le fait de réaliser un filetage permet une fixation solide de l'implant métallique dans l'os, les filets de la pièce 3 réalisée en carbone-carbone sont simplement destinés à réaliser un léger blocage de cette pièce à l'intérieur de l'os 1.

Une fois le montage de la figure 2 réalisé, on le laisse en place suffisamment longtemps (3 à 6 mois) pour que le processus d'ostéo-intégration entre la pièce et l'os s'accomplisse. Alors, on enlève la vis 6 et l'on procède à la mise en place d'une seconde pièce 10 de l'implant.

La seconde pièce 10 de l'implant est représentée en figure 3. La pièce 10 comprend une première partie 11 en forme de vis destinée à venir se visser dans le perçage taraudé 4 de la première pièce 3. La pièce 10 comporte en outre une seconde partie 12 comprenant une embase 13 venant en appui sur l'extrémité dirigée vers l'extérieur de l'os de la pièce 3. On notera que cette extrémité est propre du fait qu'elle était protégée par la vis 6. La seconde partie 12 forme en outre une protubérance 14 dirigée vers l'extérieur destinée à servir de base pour la fixation d'un objet devant être lié rigidement par rapport à l'os 1.

Ensuite, lorsque la seconde pièce 10 est vissée et bloquée sur la pièce 3, il suffit de monter l'objet 15 destiné à être lié rigidement par rapport à l'os 1 sur la protubérance 14, comme cela est représenté en figure 4. L'objet 15 peut être fixé de façon définitive sur la protubérance 14 de la pièce 10 en utilisant un ciment 16. D'autres moyens de fixation peuvent également être utilisés, de façon connue. Dans l'exemple choisi à titre d'illustration, l'objet 15 constitue une prothèse dentaire. Dans d'autre cas, cet objet peut constituer n'importe quelle structure artificielle prévue pour être liée rigidement à un os, d'une manière provisoire ou définitive.

La seconde pièce 10 est réalisée, de préférence, en un métal très résistant, par exemple en acier inoxydable ou en titane. Cependant, en particulier dans le cas où l'implant est utilisé pour fixer une prothèse dentaire, la seconde pièce 10 est réalisée de préférence en céramique. Ce matériau présente l'avantage d'avoir un aspect blanc-ocre mat qui s'approche de l'aspect d'une dent. Dans tous les cas, un tel matériau est moins visible qu'un métal qui est en général brillant. On peut utiliser de préférence une céramique connue du type bio-céramique, par exemple réalisée à partir d'oxyde de zirconium (telle que la céramique désignée sous l'appellation Prozyr).

L'implant est donc constitué d'une première pièce 3 et d'une seconde pièce 10. La pièce 3 est réalisée en carbone-carbone et présente une forme telle qu'elle n'est en fait sollicitée qu'en compression. En effet, la pièce 3 ne présente aucune partie en protubérance ou en porte-à-faux. En général, au niveau de la seconde pièce 10, les efforts exercés sont essentiellement des efforts de compression et de flexion. Comme la pièce 10 est réalisée en un matériau présentant une résistance mécanique élevée, cette pièce résiste très bien à de tels efforts et sa partie formant vis 11 ne transmet à la pièce 3 que des efforts de compression. Or, le matériau de type carbone-carbone présente une résistance élevée en compression et présente une résistance faible en traction ou en cisaillement. En outre, le fait de réaliser l'implant en deux pièces différentes 3 et 10, permet de mettre en place la première pièce 3 en carbone-carbone et d'attendre suffisamment longtemps que le processus d'ostéo-intégration s'effectue. Lorsque ce processus est terminé, on peut alors, sans danger, installer la seconde pièce 10.

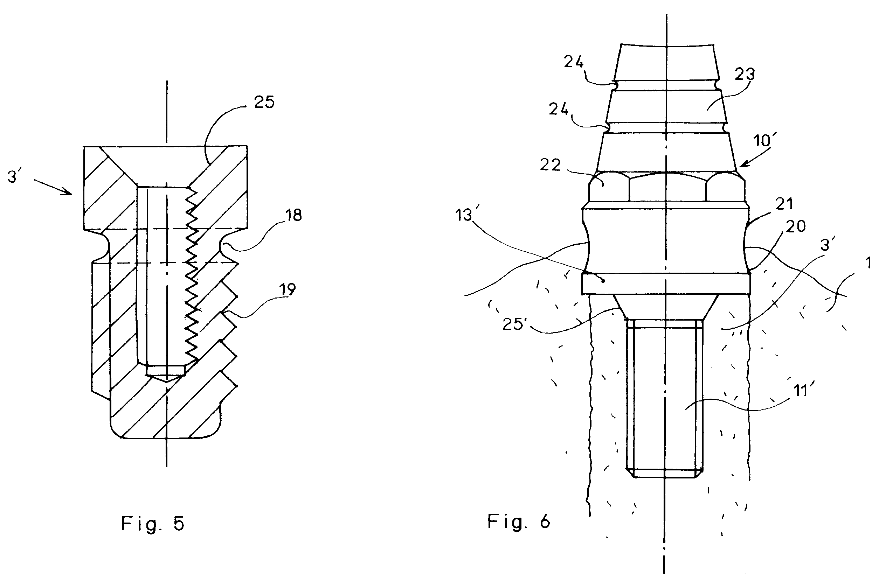

Les figures 5 et 6 représentent un mode de réalisation particulier de l'implant selon la présente invention.

La figure 5 représente, en coupe longitudinale, la première pièce 3′ de cet implant. La partie droite de cette coupe a été dessinée de façon non conventionnelle, en représentant le profil des filetage et taraudage, afin de donner leur apparence réelle. La pièce 3′ présente de préférence une gorge 18 ménagée dans sa partie supérieure et qui sert de limite supérieure à la partie filetée 19. Il n'est en effet pas indispensable que le filetage 19 s'étende sur toute la longueur de la pièce 3′, parce que sa fonction est limitée à celle d'un blocage léger lors de sa mise en place dans l'os.

Il n'est pas courant de réaliser un filetage dans une pièce monobloc en carbone-carbone, parce que ce matériau est connu pour être relativement fragile et qu'un filetage travaille habituellement d'une façon importante au cisaillement. Cependant, la pièce 3′ peut, une fois mise en place dans l'os, résister à des efforts mécaniques très importants, du fait de l'ostéo-intégration. Ce n'est donc pas le filetage 19 qui assure effectivement la fixation de la pièce 3′ de l'os, mais ce filetage assure simplement un contact intime entre cette pièce et l'os afin de favoriser le phénomène d'ostéo-intégration.

On peut de ce fait utiliser un filetage d'un pas relativement grand par rapport au diamètre, dans un rapport inhabituel en construction mécanique.

La figure 6 représente une autre forme de réalisation de l'ensemble de l'implant disposé dans un os 1. On distingue la pièce 3′ en carbone-carbone, dont les contours extérieurs sont dessinés de façon floue, afin d'illustrer le phénomène d'ostéo-intégration. La seconde pièce 10′ est vissée dans la pièce 3′ par sa partie 11′. La partie supérieure de la pièce 10′ comporte une embase 13′ ayant une partie cylindrique 20 et une partie convexe 21. De cette façon, l'os tend à emprisonner l'embase 13′ de la pièce 10′ et la partie convexe 21 permet de limiter les effets de retrait de l'os dans le temps. La pièce 10′ comporte en outre une partie hexagonale 22 permettant sa saisie et sa mise en place à l'aide d'une clef à six pans creux. Une partie supérieure en protubérance de forme tronconique 23 comprend une ou plusieurs gorges 24. Cette partie tronconique 23 peut recevoir une pièce quelconque (non représentée), et la présence des gorges 24 permet une bonne liaison par ciment avec cette pièce.

Dans une variante de réalisation, les parties en contact des première et deuxième pièces comprennent des surfaces coniques complémentaires (cône rentrant 25 dans la première pièce et cône saillant 25′ dans la deuxième) pour éviter les risques de desserrement.

La pièce 10′ peut être réalisée en céramique, par exemple en bio-céramique du type oxyde de zirconium. Un tel matériau est particulièrement avantageux parce qu'il présente un aspect blanc moins visible, en particulier lorsque l'implant est utilisé pour soutenir des prothèses dentaires. Par ailleurs, de telles céramiques présentent une résistance élevée à la traction et au cisaillement et peuvent également être meulées, afin d'adapter la partie en protubérance 23 à la forme de la pièce venant se sceller dessus.

A titre d'exemple d'ordre de grandeur, dans le cas de la mise en place d'une prothèse dentaire, la pièce en carbone-carbone 3 pourra avoir une hauteur de 7, 10 ou 13,5 mm et la tête de la vis 6 une hauteur de 1,2 à 3 mm.

## Revendications

1. Implant comprenant une première pièce monobloc (3) de forme générale cylindrique, filetée à l'extérieur et destinée à venir se visser dans une cavité adaptée ménagée dans un os (1) ; et une seconde pièce (10) réalisée en un autre matériau présentant une dureté élevée, comprenant une partie (14) adaptée à servir de base à la fixation d'un objet (15) destiné à être relié à l'os rigidement ; la première (3) et la seconde (10) pièce ayant des formes complémentaires (4, 11) permettant le vissage avec blocage de la seconde pièce dans la première, caractérisé en ce que la première pièce est réalisée en un matériau du type carbone-carbone.

2. Implant selon la revendication 1, caractérisé en ce que la deuxième pièce est réalisée en une céramique biocompatible, par exemple à base d'oxyde de zirconium.

3. Implant selon la revendication 1, caractérisé en ce que la première pièce (3) comprend un perçage taraudé (4) sensiblement concentrique, débouchant au niveau de l'extrémité de cette pièce dirigée vers l'extérieur de l'os, et en ce que la deuxième pièce (10) comporte une première partie formant vis (11) destinée à venir se visser et se bloquer dans le perçage taraudé de la première pièce.

4. Implant selon la revendication 3, caractérisé en ce que la deuxième pièce (10, 10′) comprend en outre une seconde partie formant embase (13, 13′) destinée à venir en appui sur ladite extrémité de la première pièce et formant une protubérance (14, 23) dirigée vers l'extérieur de l'os, servant de base rigide pour la fixation d'un objet (15) destiné à être relié rigidement à l'os.

5. Implant selon la revendication 1, caractérisé en ce que lesdites formes complémentaires incluent des cônes complémentaires (25, 25′).

6. Implant selon la revendication 1, caractérisé en ce que la deuxième pièce a, au niveau de la sortie de l'os, un fût convexe (21).

## Claims

1. An implant including a first, generally cylindrical, integral part (3), externally threaded and designed to be screwed in a suitable recess provided in a bone (1); and a second part (10) made of another hard material, including a portion (14) adapted to serve as a base for fixing an object (15) designed to be rigidly coupled to the bone; the first (3) and the second (10) parts having complementary forms (4, 11) for screwing and blocking the second part into the first part, characterized in that the first part is made of a carbon carbon type material.

2. The implant of claim 1, characterized in that the second part is made of a bicompatible ceramics, for example a ceramics including zirconium oxide.

3. The implant of claim 1, characterized in that the first part (3) includes a substantially concentric threaded bore (4) opening at the end of said part oriented externally to the bone, and in that the second part (10) includes a first portion forming a screw (11) designed to be screwed and blocked in the threaded bore of the first part.

4. The implant of claim 3, characterized in that the second part (10, 10') further comprises a second base portion (13, 13') designed to abut against said end of the first part and to form a protuberance (14, 23) oriented externally to the bone, serving as a rigid base for fixing an object (15) intended to be rigidly connected to the bone.

5. The implant of claim 1, characterized in that said complementary forms include complementary tapered portions (25, 25').

6. The implant of claim 1, characterized in that the second part has a convex cylindrical portion (21) at the bone exit.

## Patentansprüche

1. Ein Implantat, das ein erstes einstückiges, im allgemeinen zylindrisches Teil (3) mit Außengewinde umfaßt, das in einen im Knochen (1) eingebrachten, angepaßten Hohlraum einzuschrauben ist, und das ein zweites Teil (10) aus einem anderen Material mit erhöhter Festigkeit umfaßt, das ein zur Befestigungsgrundlage für ein Objekt (15) geeignetes Teil (14) aufweist, das mit dem Knochen fest zu verbinden ist, wobei das erste Teil (3) und das zweite Teil (10) eine zueinander komplementäre Form (4, 11) haben, um eine gesicherte Verschraubung des zweiten Teils in dem ersten Teil zu ermöglichen, dadurch **gekennzeichnet**, daß das erste Teil aus einem Material des Typs Kohlenstoff-Kohlenstoff hergestellt ist.

2. Implantat nach Anspruch 1, dadurch **gekennzeichnet**, daß das zweite Teil aus einem bikompatiblen Keramikwerkstoff hergestellt ist, zum Beispiel auf Zirkoniumoxid-Basis.

3. Implantat nach Anspruch 1, dadurch **gekennzeichnet**, daß das erste Teil (3) eine im wesentlichen zentrierte Bohrung mit Innengewinde (4) umfaßt, die auf der Höhe des äußersten Endes dieses Teils, das zur Außenseite des Knochens gerichtet ist, ausmündet und dadurch, daß das zweite Teil (10) einen ersten Abschnitt aufweist, der eine Schraube (11) bildet, die in die Bohrung mit Innengewinde des ersten Teils eingeschraubt und gesichert werden kann.

4. Implantat nach Anspruch 3, dadurch **gekennzeichnet**, daß das zweite Teil (10, 10') außerdem einen zweiten Abschnitt mit Sitzfläche (13, 13') hat, die am besagten Ende des ersten Teils anlaufen soll und einen Vorsprung (14, 23) bildet, der vom Knochen weg nach außen gerichtet ist und als feste Grundlage zur Befestigung eines Objektes (15) dient, welches starr mit dem Knochen zu verbinden ist.

5. Implantat nach Anspruch 1, dadurch **gekennzeichnet**, daß die besagten komplementären Formen komplementäre Konusse (25, 25') einschließen.

6. Implantat nach Anspruch 1, dadurch **gekennzeichnet**, daß das zweite Teil auf der Höhe seines Austritts aus dem Knochen einen konvexen Schaft (21) hat.
